# EUROPEAN PATENT SPECIFICATION

(11) **EP 2 058 800 B1**
(45) Date of publication and mention of the grant of the patent: **01.09.2010**
(21) Application number: 07020821.0
(22) Date of filing: 24.10.2007
(51) Int. Cl.: G10L 15/18, G06F 17/30

(54) **Method and system for recognizing speech for searching a database**
Verfahren und System zur Spracherkennung zum Durchsuchen einer Datenbank
Procédé et système de reconnaissance vocale pour la recherche dans une base de données

(43) Date of publication of application: 13.05.2009
(73) Proprietor: Harman Becker Automotive Systems GmbH, 76307 Karlsbad (DE)
(72) Inventor: König, Lars, 89075 Ulm (DE); Löw, Andreas, 89077 Ulm (DE); Haiber, Udo, 89075 Ulm (DE)
(74) Representative: Bertsch, Florian Oliver

(56) References cited:
- US-A1- 2002 152 207
- US-A1- 2004 148 164
- US-B- 6 882 970
- OHTSUKI K ET AL: "Unsupervised Vocabulary Expansion for Automatic Transcription of Broadcast News" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 1021-1024, XP010792214 ISBN: 0-7803-8874-7
- JILEI TIAN1 ET AL: "ON TEXT-BASED LANGUAGE IDENTIFICATION FOR MULTILINGUAL SPEECH RECOGNITION SYSTEMS" 16 September 2002 (2002-09-16), ICSLP 2002 : 7TH INTERNATIONAL CONFERENCE ON SPOKEN LANGUAGE PROCESSING. DENVER, COLORADO, SEPT. 16 - 20, 2002, INTERNATIONAL CONFERENCE ON SPOKEN LANGUAGE PROCESSING. (ICSLP), ADELAIDE : CAUSAL PRODUCTIONS, AU, PAGE(S) 501 , XP007011225 ISBN: 1-876346-40-X * abstract; figure 1 *

## Description

The present invention relates to a method and system for recognizing speech for searching a database, wherein a search request can be entered by voice.

### Background of the Invention

Conventional speech recognition systems are being used for a range of applications. Speech recognition is used to allow a user to enter a voice command for controlling an operation of a device, such as a telephone or a navigation system. Conventional speech recognition systems also comprise speech recognition software that can be run on a computer system, such as "Dragon NaturallySpeaking", which is used to dictate text or to control functions of the computer. As such, the program can be used to navigate a web browser by speech, and accordingly, a search query may be entered into the web browser by speech. That way, a database of a search engine may be searched by speech input. Yet, there are several problems using conventional speech recognition systems to search databases by voice. Conventional speech recognition systems only recognize words that are comprised in their vocabulary. The vocabulary is generally rather limited, e.g. some 10.000 words on conventional systems, and up to 500.000 words on advanced systems. Yet, larger vocabularies require more time to search the vocabulary, and morse resources in form of memory and processing power. Besides being limited in size, vocabularies often lack specialized expressions, names of places and persons, and other words not used in the colloquial language. As a result, many entries that may be found in a database cannot be accessed by voice using a conventional speech recognition system, as these entries are not comprised in the vocabulary of such a system. Examples of such databases are a collection of music files, of which artists or song titles are not comprised in the vocabulary, points of interest stored in a navigation system, addresses and names of persons in a phone book or in an internet database, and the like. If the user wants to search for a word in the database not comprised in the vocabulary, the speech recognition system will either select a word from its vocabulary most closely resembling to the word, or simply ignore the word. As a result, conventional speech recognition systems provide very limited possibilities of searching databases.

If the structure of the database is known, e.g. in a music collection, where song titles and artists are known to the system, these data may be prepared for speech recognition. Yet, this process is often very time consuming and not efficient for large databases. The structure of other databases is unknown, such as a database accessed over the internet, and accordingly, their entries cannot be added to the vocabulary of a speech recognition system.

The document US 2002/0152207 A1 describes a method and apparatus for processing a user's communication. A user's communication in form of a spoken input is recognized by using a recognizer grammar list created from a listing's database. A database entry best matching the recognized string is then identified by comparing N-grams extracted from a plurality of database entries and from the recognized string.

Further problems may arrive from multilingual search requests, e.g. when searching for song titles and artists or when searching for web pages. Furthermore, the database may contain orthographic alternatives of a word of the search request, or plural alternatives may exist for the pronunciation of a word of a database entry. These problems result in that the database entry that is requested by the user will not be found using a conventional speech recognition system. These problems may also occur in combination. A user may for example enter the German word "die" as a spoken search request, yet, the system may only deliver search results for the alternative of the English word "die". Thus, conventional speech recognition systems do not enable a user to extensively search a database, particularly not if multilingual entries are comprised in the database.

### Summary of the Invention

Accordingly, there is a need to provide an improved method and system for searching a database by speech input.

This need is met by the characterizing features of the independent claims 1 and 21, respectively. The dependent claims describe preferred embodiments of the invention.

There is furthermore provided a computer program product and an electronically readable data carrier according to claims 27 and 28, respectively.

Further advantages of the invention will become apparent from the following detailed description read in conjunction with the accompanying drawings.

### Brief Description of the Drawings

Fig. 1 shows a schematic diagram of an embodiment of a system for recognizing speech for searching a database.
Fig. 2 shows a schematic diagram of a component of a system for recognizing speech for searching a database.
Fig. 3 is a schematic diagram illustrating a speech input, recognized words, recognized pseudo-words and pseudo-word properties.
Fig. 4 shows a component of a system for recognizing speech for searching a database.
Fig. 5 shows a schematic diagram of search results and search words.
Fig. 6 shows a flow diagram of an embodiment of a method of recognizing speech for searching a database.
Fig. 7 shows a flow diagram of an embodiment of a method of recognizing speech for searching a database.
Fig. 8 shows a flow diagram of a part of an embodiment of a method of recognizing speech for searching a database.

### Detailed Description of the Presently Preferred Embodiments

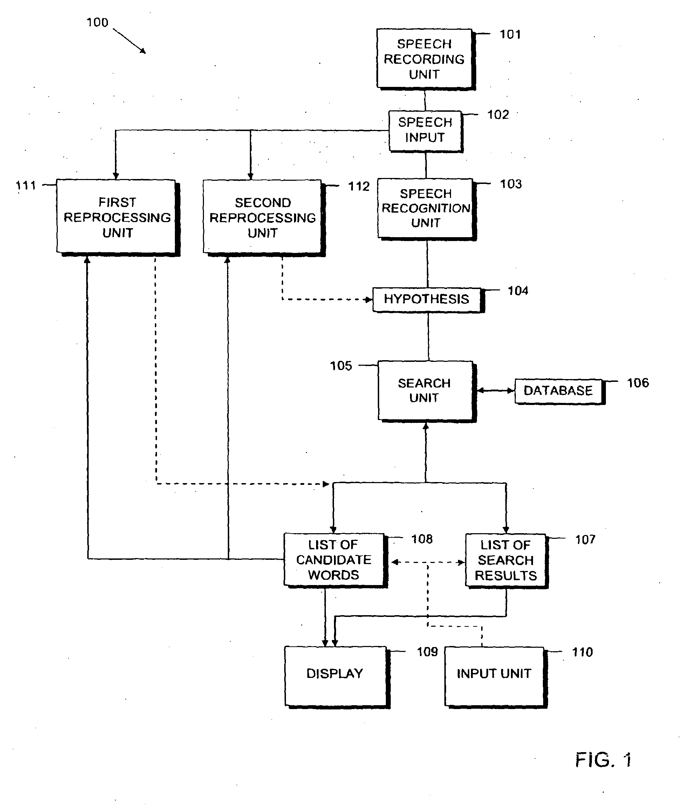

Fig. 1 shows a schematic diagram of an embodiment of a system 100 for recognizing speech for searching a database. The system 100 comprises a speech recording unit 101 for detecting a search request of a user. The speech recording unit 101 may be in form of a software code portion detecting a speech signal from e.g. an analog to digital (AD) converter, yet, it may also comprise a microphone and the AD converter itself. A user may enter a search request into the system by speaking out the search request, and the speech recording unit 101 records the search request and preferable digitizes it, so that a speech input 102 is obtained in form of a digitized signal. The speech input 102 may be stored in a memory, such as a random access memory, or some other kind of memory. The speech input 102 is then supplied to a speech recognition unit 103. The speech recognition unit 103 is formed so as to recognize the speech input 102 based on known or probable words using a statistical or rule based model. The speech recognition unit 103 is configured so that it can also identify and classify unknown words (pseudo-words), wherein classifying means to obtain pseudo-word properties, e.g. in the form of vowels, consonants, syllables, grapheme, word separators and the like. The speech recognition unit 103 may also recognize semantic information in the speech input 102. The speech recognition unit 103 then forms a hypothesis, which may comprise the recognized words, the pseudo-words, pseudo-word properties, semantic information, and a measure of confidence, e.g. for the recognized words or the pseudo-words. Preferably, the speech recognition unit 103 generates plural hypothesis, e.g. of alternatives of words or pseudo-words. The one or more hypothesis 104 may be stored in a memory, such as an internal random access memory, or another kind of memory, such as a hard drive, a flash memory or the like.

The hypothesis 104 is then supplied to a search unit 105. The search unit 105 processes the hypothesis 104 delivered by the speech recognition unit 103. The search unit 105 searches a database 106 using the hypothesis 104 as one or more search queries. The database 106 may contain database entries and database data, and the database entries may be indexed so that they can be easily found. If the database is, for example, a database of music files, the song titles and artist names of the music files in the database may be extracted and indexed to form a list of database entries, which can then be searched. The search unit 105 also searches the database 106 for pseudo-words comprised in the hypothesis 104. The pseudo-words of the hypothesis 104 may not be proper words, and may as such not be comprised in the database 106, as a result of which it is preferential to process the database entries and the pseudo-words in order to obtain search results. The search unit 105 may, for example, estimate the language of the database entries, so that these can be further processed. It may then generate orthographic and/or pronunciation alternatives of the database entries. This may also be done in a two-step process. The search unit 105 may, for example, send a search query to an external database 106, such as an internet database. A search machine, such as Google™ or Yahoo!® may then, for example, deliver a number of search results already comprising autographic alternatives and/or an estimation of the language. Using these primary results, the search unit 105 may then generate pronunciation alternatives of the database entries delivered by the search machine, and may then derive properties of these database entries and entry alternatives. Such properties may again be a sequence of vowels and consonants, grapheme, and the like. The search unit 105 then compares properties of the pseudo-words of the hypothesis 104 with the properties of the entry alternatives. This allows a recognition of database entries comprising the pseudo-words, even though the pseudo-word was not recognized by the speech recognition unit 103.

The search unit 105 may furthermore evaluate the semantic information of the hypothesis 104 delivered by the speech recognition unit 103. The semantic information may, for example be used to refine the search. It may either be directly delivered to the database 106 in a search query, or the database entries delivered by the database 106 may be singled out according to the semantic information. As a result, the search unit 105 delivers a list of search results 107, which may again be stored in an internal memory. The search result in the list 107 may have a different relevance, meaning that they reflect the hypothesis 104 more or less well. A search result generally corresponds to a database entry comprising one or more of the words or pseudo-words of the hypothesis 104. The search result may thus be rated, e.g. by counting the words of the hypothesis comprised in the search result, or by a measure of proximity between the words of the hypothesis and the words in the search result. According to the rating, the search results may be weighted in the list, with better matching search results or search results with a higher relevance being further up the list. The list of search results 107 may furthermore comprise the words found in each search result, or the words identified as words corresponding to the pseudo-words of the hypothesis. The search unit 105 furthermore generates a list of candidate words 108, which is again stored on an internal memory. The search unit 105 identifies candidate words as words of database entries that may correspond to pseudo-words of the hypothesis 104. It may identify candidate words by e.g. comparing the properties of the pseudo-words with the properties of database entries. Yet, it may also compare the search results with the pseudo-words to find words in the search results most likely corresponding to the pseudo-words. A candidate word is thus associated with a pseudo-word, and several candidate words may be found for a pseudo-word. The list of candidate words 108 as well as the list of search results 107 are then provided to the user on a display 109, which may have the form of an LCD screen, or a CRT, a head-up display, or the like. The found words comprised in the list of search results 107 may also be provided to the user on the display 109, and it is optional to provide the list of candidate words 108. Preferably, the list of search results is provided with the highest rated or weighted search results on top, so that the user can access the most relevant search results first.

The user may then decide that some words, e.g. candidate words, were wrongly identified and are not desired. Accordingly, the search unit 105 may have delivered a list of search results 107 which does not comprise the appropriate database entries requested by the user. The user may thus use an input unit 110 in order to exclude or devaluate search results in the list of search results 107. Input unit 110 may be in the form of a control element, such as a mouse, a button, a rocker, or a turn push button or the like, or in the form of a speech input unit. The user may, for example, select a search result in the list of search results and devaluate it, meaning that its weighting is reduced, so that it is shifted further down the list. The user may also exclude a search result, meaning that the search result is removed from the list. The search unit 105 may access the modified list of search results 107 in order to refine the search or perform a new search according to the search results devaluated or excluded by the user. Similarly, the user may select particular found words or candidate words which the user may want to exclude or devaluate. The search unit 105 may have delivered a number of alternatives for a pseudo-word comprised in the hypothesis 104, and some of these alternatives, which are displayed in the list of candidate words 108, may not be wanted by the user. The user may then exclude these candidate words from the list of candidate words 108 by using the input unit 110. Furthermore, the user may also want to exclude some of the found words comprised in the list of search results 107 from the search. The search unit 105 may therefore access the list of candidate words 108 and/or the list of search results 107 to perform a new search using the remaining candidate words and/or found words in a search query. Accordingly, a new list of search results 107 is generated by the search unit 105 and provided to the user by means of the display 109. The user is thus provided with a method of improving the obtained search results. Furthermore, the user may also extend the list of search results or the list of candidate words by entering new words for a new search request, e.g. by speech.

The candidate words comprised in the list of candidate words 108 are generally not comprised in a vocabulary used by the speech recognition unit 103 to recognize words in the speech input 102, as they correspond to the not-recognized pseudo-words. The list of candidate words 108 may thus be provided to a first reprocessing unit 111, which extends a vocabulary with the candidate words and performs another speech recognition. The first reprocessing unit 111 accesses the speech input 102 and recognizes words in the speech input using a vocabulary extended by the candidate words. If candidate words were found for all pseudo-words comprised in the hypothesis 104 by the search unit 105, the first reprocessing unit 111 should be able to identify all the words of the speech input 102. In other cases, the first reprocessing unit 111 may only be able to identify some of the words comprised in the speech input 102. Of the several candidate words that may be associated with a pseudo-word, the first reprocessing unit 111 is preferably able to select the best fitting candidate word, e.g. by using a measure of proximity or by using a speech model to identify the best matching candidate word. The best matching candidate word may be determined, or a matching probability, or measure of proximity may be determined for the alternative candidate words. As a result of this recursive process, it is now known which candidate word best describes the corresponding part of the speech input 102, and thus, the results can be used to reorder the search results in the list of search results 107 according to their relevance. A search result comprising the best matching candidate word may, for example, be located at the bottom of the list, even though it may be a very relevant search result. By identifying the words in the speech input with the new recognition step, it may be determined that the result is in fact very relevant and the result may thus be moved further up the list. The extended vocabulary thus enables a better recognition of the speech input 102 by the first reprocessing unit 111, and accordingly, the relevance of the search results can be better judged, and a reordered list of search results 107 is provided.

Similarly, a second reprocessing unit 112 may be supplied with the list of candidate words 108 and may access the speech input 102. The second processing unit 112 then uses a vocabulary extended by the candidate words to perform another speech recognition of the speech input 102, wherein recognized words are obtained. As the extended vocabulary was used, most of the words of the speech input 102 should be recognized, so that the result generated by the second processing unit 112 should not contain any pseudo-words. In cases where the pseudo-word of the speech input 102 was not found by the search unit 105, the result produced by the second processing unit 112 may still contain pseudo-words. The second reprocessing unit 112 generates a new hypothesis comprising the recognized words and in some cases pseudo-words. The hypothesis 104 may then be substituted by this new hypothesis, which is then again processed by the search unit 105. As the new hypothesis generally comprises fewer pseudo-words than the original hypothesis, the search unit will be able to deliver better, more precise search results. The search unit 105 will thus generate a new list of search results 107, which is then displayed to the user. The first reprocessing unit 111 and the second reprocessing unit 112 may work in the background. For example, the first list of search results is generated by the search unit 105 from the original hypothesis. While the first list of search results is displayed to a user, the first reprocessing unit and the second reprocessing unit may perform speech recognition in the background. After the user did not select a result from the list of search results for a predetermined amount of time, the list of search results 107 may be reordered according to the words recognized by the first processing unit 111. After no selection has been made for an additional amount of time by the user, a new search may be performed by using the new hypothesis generated by the second processing unit 112. The new list of search results is then displayed to the user. Alternatively, the user may directly select to reorder the list of search results 107, or to perform a new search using the new hypothesis. As a result, the user of the system 100 is provided with improving lists of search results. Even though the database 106 may comprise a large unknown vocabulary, it is possible to find database entries comprising words not known to the vocabulary, and these words may then be added as candidate words to the vocabulary to extend the vocabulary. This results in an improved speech recognition, and in an improved list of search results being provided to the user. The system 100 of the present embodiment thus not only allows the searching of large databases, but also adaptively improves speech recognition. The units 101, 103, 105, 111 and 112 may be implemented as software code portions and executed on a microprocessor. The database 106 may be a local database comprising files and an index of database entries, yet it may also be a remote database, such as the internet, and may also comprise a search engine for searching the database, such as Google™ or Yahoo!®. The database may then be accessed, for example, through a network connection, e.g. a wireless connection, through Bluetooth, through a mobile telephony network or the like.

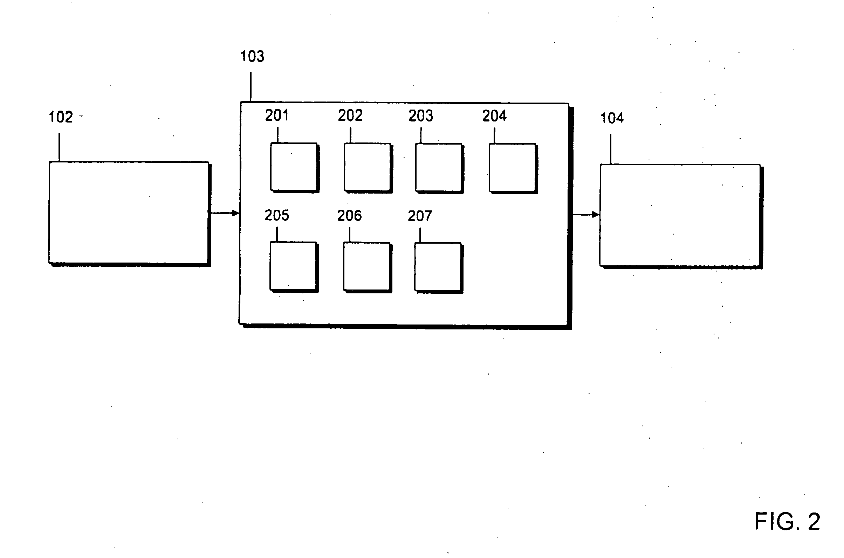

Fig. 2 shows a more detailed view of an embodiment of a speech recognition unit 103. In different figures, the same reference signs denote similar components. The speech recognition unit 103 is supplied with a speech input 102, and generates a hypothesis 104. The speech recognition unit 103 comprises a specialized vocabulary 201 to 204. It furthermore, comprises a general vocabulary (not shown) which may be a basic vocabulary of a system such as a navigation system with speech recognition, or a dictation system such as Dragon NaturallySpeaking. Vocabulary 201 comprises words that are frequently used in search requests in one or more languages. Such words may, for example, be: "I", "would", "please", "show", "today", "tomorrow", and so on. A list of these most commonly spoken search requests may, for example, be formed by gathering and storing search requests sent to a database. Words from such search requests may be collected over some time and added to the vocabulary at predetermined times. These words may also comprise additional semantic information, such as the words "today", "tomorrow", or "search". The semantic information may be evaluated in the speech recognition unit 103.

The vocabulary 202 comprises the presently most commonly used search queries of a database, e.g. the database 106. Every time the database is searched, the words comprised in the search query may be collected and a list of the most commonly used search queries for the database may be formed. The list may be refreshed regularly, and may be stored in a remote location, such as the internet, or in conjunction with the database. The list may be multilingual, and may also comprise the phonetic of the words of the search requests. The vocabulary 203 comprises words that are obtained by user involvement. Preferably, these are words collected from applications which a user uses, such as e-mail programs, visited websites, address books and the like. Words used in these applications have a high probability of becoming part of a search request. Accordingly, words may be collected from user operated applications and added to the vocabulary. The vocabulary 204 provides pronunciation variants for words. Some words may be pronounced differently in different dialects, so that by providing the vocabulary 204, speech recognition can be improved. By using the vocabulary 201 to 204, the system has access to a vocabulary specialized to recognize search requests by a user. Even though the speech recognition unit 103. may only comprise a small standard vocabulary, its ability to properly recognize search requests by a user are greatly enhanced by using the specialized vocabulary 201 to 204.

The speech recognition unit 103 furthermore comprises an exclusion vocabulary 205. The exclusion vocabulary 205 is used to exclude words recognized from a search request. A search request may for example be a sentence containing fill words which may not be useful for searching a database. The search vocabulary 205 may comprise words that are not useful for searching a database, and after a hypothesis was generated by the speech recognition unit 103, words may be excluded from said hypothesis according to the exclusion vocabulary. This prevents an unnecessary restriction of the search, and also reduces processing time required during the search.

As an example, speech may then be recognized as follows: From the speech input 102 in form of a digitized signal, the speech recognition unit 103 may extract feature vectors. It may then use hidden Markov models (HMMs) for phonemes of different languages to transcribe the speech input into a phonetic sequence. Using the vocabulary and the specialized vocabulary, words are then identified in the sequence of phonemes. For several phoneme segments of the phoneme sequence, there may be a number of possible words. The number of possible words can generally be reduced by using a speech model 206. The speech model 206 may, for example, be a rule base or a statistical model, which contains information about in which sequences words occur, e.g. the probabilities for particular word sequences. There are several speech models known to a person skilled in the art, and these will not be discussed in more detail here. Even though a speech model 206 is used, there may still be plural possibilities for describing the phonetic sequence with words, and accordingly, plural hypotheses may be generated.

The speech recognition unit 103 furthermore comprises a pseudo-word recognition unit 207. The unit 207 recognizes pseudo-words in the speech input. Not all segments of the speech input, which was converted to a phonetic sequence, may be recognized as words. The remaining unrecognized segments are processed by the pseudo-word recognition unit 207. The unit 207 may first recognize which segments of a phonetic sequence were not recognized as words. For these segments, the unit may then use properties of the acoustic signal to derive a plurality of character sequences. Such a character sequence may already be a proper word, but in most cases, it will by itself not make sense. A character sequence may be a sequence of phonetic characters, yet it may also be a sequence of text characters, e.g. transcribed from phonetic characters. Furthermore, the unit 207 will derive properties from these character sequences, or the so-called pseudo-words. As mentioned above, a property may, for example, be the sequence of vowels and consonants. The pseudo-words and their properties are then included in the hypothesis 104 and supplied to a search unit 105. Preferentially, plural hypotheses are provided, and the hypotheses are weighted according to a measure of confidence. The measure of confidence describes the confidence with which the speech recognition unit 103 recognizes the words in the speech input 102. As an option, the hypothesis may furthermore comprise the acoustic signal itself, and it preferentially comprises semantic information.

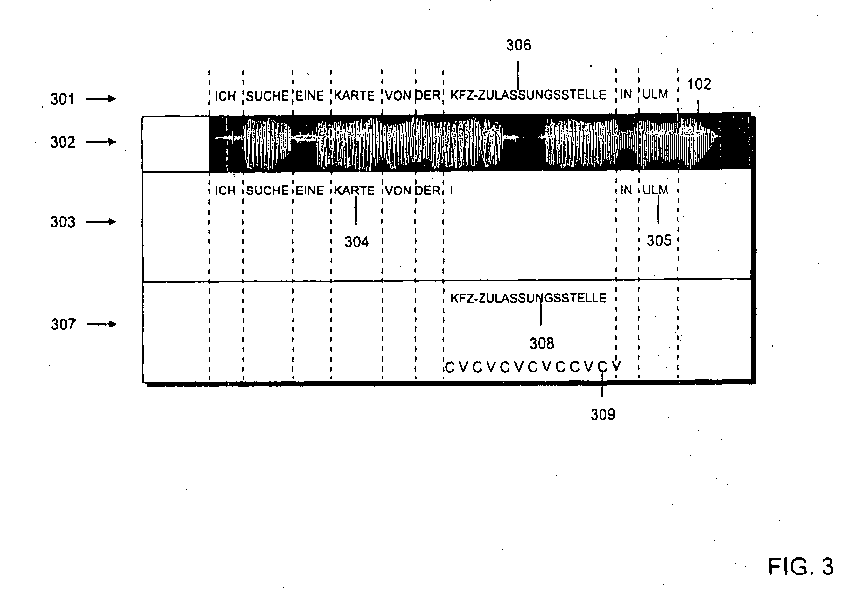

Fig. 3 shows an example of such a hypothesis, and as mentioned above, a number of such hypotheses may be supplied to the search unit 105. Row 301 contains a spoken search request, here illustrated in written form. A speech input shown in row 302 is provided by the speech recording unit 101 in form of a digitized acoustic signal. Row 302 is an optional part of a hypothesis. Row 303 shows the words recognized by the speech recognition unit 103. As the search request was in German, a German vocabulary may be used to recognize words of the speech input 102. By using a specialized vocabulary 202 comprising the most commonly used search queries, the word 304 ("Karte") is recognized. The word 305 ("Ulm"), which is the name of a location, is recognized by using the user involved vocabulary 203. For example, the user may have written an e-mail in which he states that he wants to travel to "Ulm", as a result of which the system takes up the word "Ulm" into vocabulary 203. The word 306 ("KFZ-Zulassungsstelle") may not be recognized by the speech recognition unit 103. Accordingly, the pseudo-word recognition unit 207 recognizes word 306 as a pseudo-word. The pseudo-word is transcribed into a sequence of characters and shown in row 307. In this example, the sequence of characters correctly represents the spoken word 306, yet, this may generally not be the case. The pseudo-word recognition unit 207 furthermore extracts properties from the pseudo-word 308, for example the sequence of characters and vowels 309. The sequence 309 is only schematically represented here and does not reflect the true vowel and consonant sequence of pseudo-word 308. For the same segment of the speech input 102, the pseudo-word recognition unit 207 preferably derives more than one pseudo-word 308, i.e. several transcription possibilities. For these, pseudo-word properties are derived. Preferably, more properties than the vowel consonant sequence 309 shown here are derived. In the embodiment of Fig. 3, the hypothesis is thus made up of the acoustic signal in row 302, i.e. the speech input 102, words in row 303 recognized by the speech recognition unit 103, as well as pseudo-words and pseudo-word properties in row 307. Furthermore, semantic information may be supplied. The speech recognition unit 103 may for example identify that the word "Suche" has the meaning that the user requests a search, and that the word kart" means that the user is requesting a map. This information may be used to refine a search by the search unit 105, e.g. the search unit 105 may only search databases comprising maps. Identifying semantic information is thus very advantageous as it will deliver better search results.

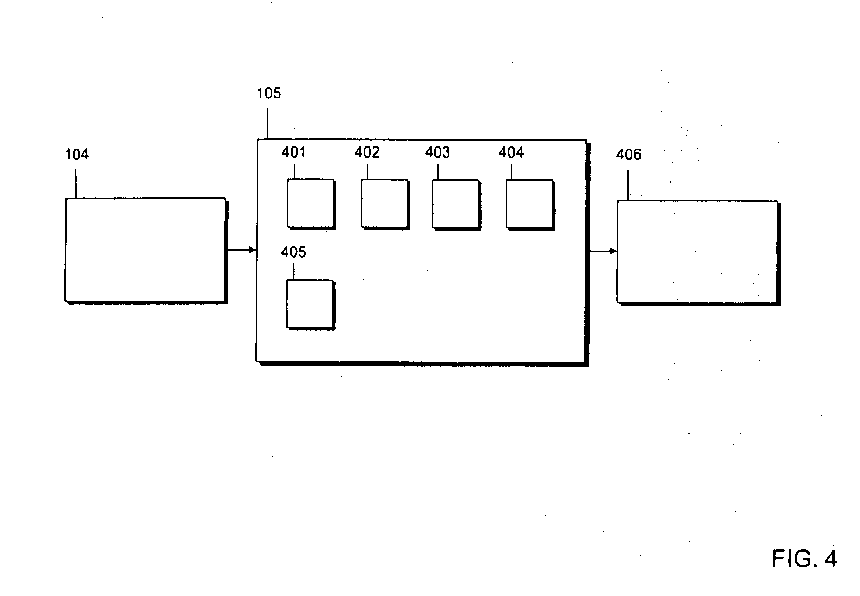

Fig. 4 shows a schematic representation of an embodiment of the search unit 105. Search unit 105 searches a database with words and information comprised in the hypothesis 104 supplied to unit 105. For performing the search, the search unit 105 pre-processes database entries. Using a language determination unit 401, the language of database entries is determined. This is advantageous since once the language is known, pronunciation and/or autographic alternatives of database entries may be formed. As in the database, the database entries are usually embedded within other words, and thus within a context, estimating the language is relatively simple. Estimating the language may be achieved by using a vocabulary, a speech model, or the like. Furthermore, the search unit 105 comprises an orthographic alternative forming unit 402 and a pronunciation alternative forming unit 403. Unit 402 may use a dictionary or vocabulary in order to form orthographic alternatives of database entries. The estimation of the language or the forming of orthographic alternatives of entries may also be performed directly by the database itself. The database may then deliver database entries as well as language information and autographic alternatives. A database entry may be a single word, or a number of words, and forming alternatives comprises forming alternatives of one or several words comprised in a database entry. Of the database entry or entry alternatives, unit 403 forms pronunciation alternatives. This may be performed by using an auto transcription procedure and a pronunciation vocabulary/ dictionary, comprising pronunciation alternatives. Auto transcription may, for example, refer to transcribing words into phonetic characters.

The search unit 105 furthermore comprises an exclusion list for pseudo-words (404). A search may deliver a number of search results comprising words corresponding to words in the hypothesis, and comprising words corresponding to pseudo-words in the hypothesis. The words corresponding to pseudo-words are obtained by the search by making use of the formed alternatives and the pseudo-word properties. The results may comprise several alternative words associated with a pseudo-word, and some of these words may already be comprised in the vocabulary used by the speech recognition unit 103. As the speech recognition 103 did not recognize the pseudo-word, it can be concluded that the corresponding alternative already comprised in the vocabulary may not be a suitable alternative. Accordingly, this alternative may be excluded from the database entries of the search result. When forming a list of candidate words, the search unit 105 may exclude these words that are already comprised in the vocabulary from the candidate list. These words are thus not indexed as pseudo-words.

The search unit 105 furthermore comprises a comparison unit 405. The comparison unit 405 compares database entries, which may have been pre-processed using one of the above-described methods, with words and pseudo-words comprised in the search query formed of the hypothesis 104. A search query may contain words and pseudo-words, as well as alternatives comprised in the hypothesis 104, yet, it may also contain the semantic information and pseudo-word properties. The semantic information is used to narrow the search query. Semantic information may comprise place information or time information, as well as other information that can be derived from words comprised in the hypothesis which is useful for narrowing the search. From the comparison, search results are generated. Alternatively, the search query may be directly submitted to a database which delivers search results in return. Comparison unit 405 may then be used to further narrow the search results, e.g. by using semantic information.

As a result of the search with the search query, a list of database entries is obtained, comprising the words found; i.e. words of the search query that were found in the database entries, as well as a list of words found during the search that correspond to pseudo-words. The search unit 105 may also supply the phonetic transcriptions of these candidate words. The results supplied by the search unit 105 are depicted as search results 406 in Fig. 4, which may comprise the list of candidate words 108 and the list of search results 107 of Fig. 1.

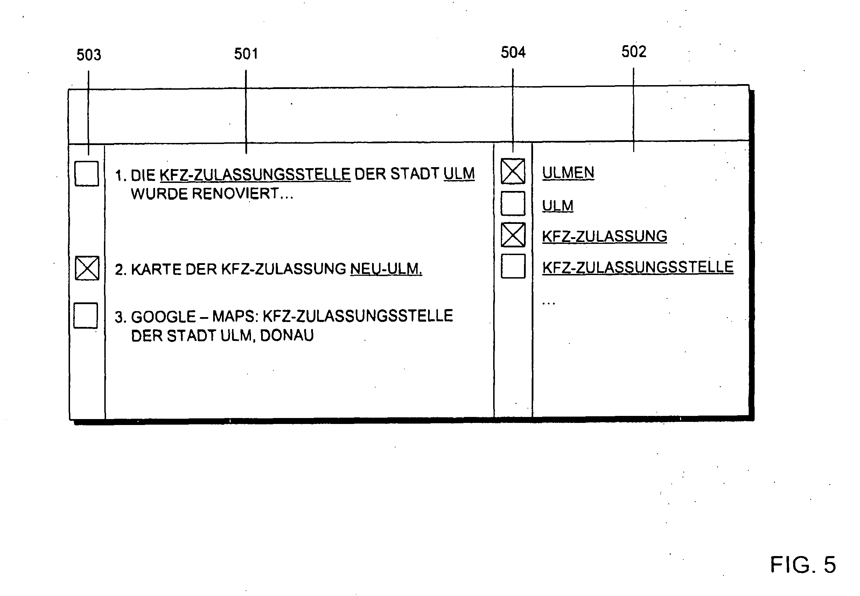

Fig. 5 is a schematic representation of a display of search results. In column 501, search results in the form of database entries are provided. In the database entries, the words that were found in the database entry during the search are highlighted, here by an underlining. The search results of Fig. 5 correspond to the search request of Fig. 3. In column 502, found words as well as candidate words are provided. For the word "Ulm", which was comprised and recognized in the search request, database entries were found, and accordingly, the word is displayed in column 502. An orthographic alternative is also displayed with the word "Ulmen". Furthermore, for the pseudo-word 308 ("KFZ-Zulassungsstelle'.') of Fig. 3, the search unit may have found database entries with corresponding candidate words "KFZ-Zulassung" and "KFZ-Zulassungsstelle". These possibilities, for which database entries were found, are also provided to the user in column 502. In columns 503 and 504, the user now has the possibility to devaluate and/or exclude search results or found words/candidate words, respectively. This may be done by a manual input using a control element, or by a voice command. In Fig. 5, the user has selected the check boxes for the words "Ulmen" and "KFZ-Zulassung" in column 504, as these words were not comprised in the search request he entered into the system. In a next step, a search may be performed without considering these alternative words, or the search results displayed in column 501 may be reordered, with a new rating of the results being determined without considering the checked words. Similarly, a check box in column 503 is checked for a database entry displayed in column 501 which is supposed to be excluded or devaluated from the list of database entries. The user is thus given the possibility to improve the search by user input, and to obtain better search results.

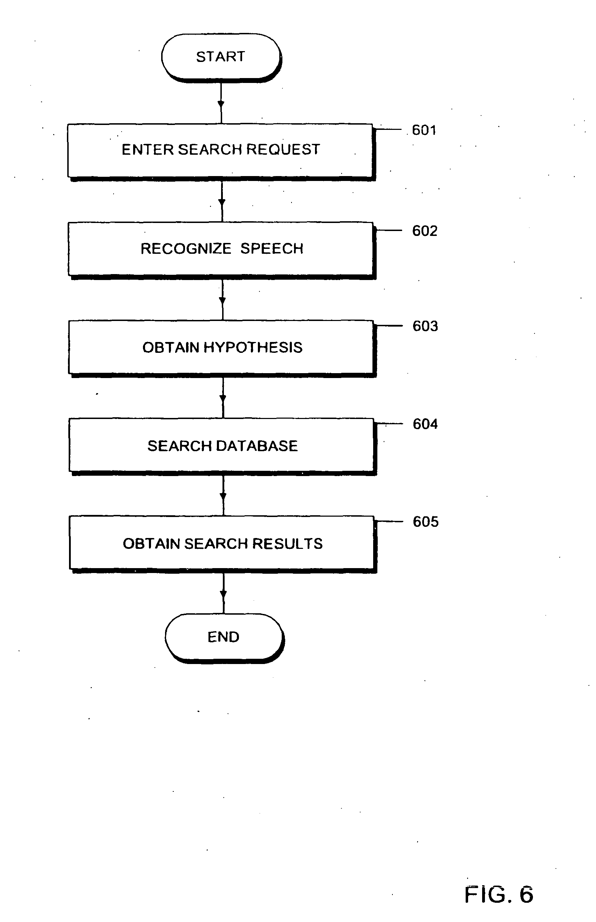

Fig. 6 shows an embodiment of a method for recognizing speech for searching a database. In a first step 601, a user enters a search request by speaking out the search request, which is then recorded with a microphone and provided in the form of an acoustic signal as speech input. The speech input is then processed to recognize speech in step 602. The speech recognition step 602 delivers one or more hypotheses in step 603. In the speech recognition step, words in the speech input 102 are recognized using a vocabulary. Words of the speech input not comprised in the vocabulary are identified as pseudo-words. Generally, a probability-based method is used for speech recognition. Accordingly, several words may be recognized having different probabilities, and as a result, several hypotheses may be provided in step 603. The hypotheses comprising words and pseudo-words are then used as a search query for searching a database in step 604. The searched database may be a database internal to the system on which the method for recognizing speech is carried out, e.g. a location database in a navigation system with speech recognition, or a music database in a multimedia system with speech recognition, yet, it may also be an external database such as a database of the internet. By searching the database in step 604, search results are obtained in step 605. Search results may be obtained as a list of search results comprising database entries, and optionally, a list of found words may also be provided as a search result. A list of found words is, for example, a list of words that were found in the database in response to the search query. The list of search results is then provided to the user, which may select one of the search results in order to obtain more information or to perform an action, such as entering a destination into a navigation system or selecting a song from a music database which is to be played back.

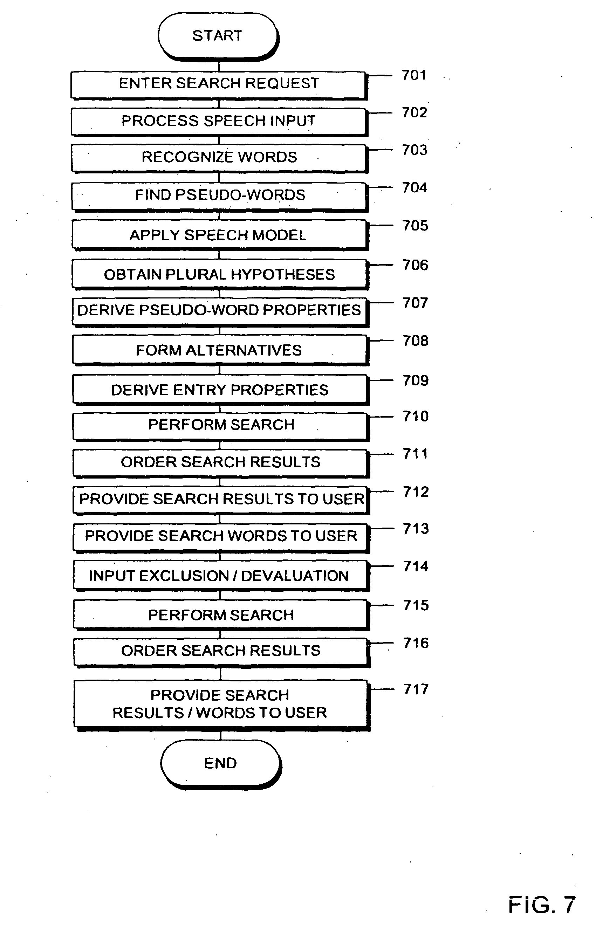

Fig. 7 shows a flow diagram of another embodiment of a method of recognizing speech for searching a database. Again, a search request is entered by a user in step 701, and the speech input in form of the acoustic signal is processed in step 702. Words in the speech input are recognized in step 703. In step 704, pseudo-words are found in the speech input. A speech model is then applied in step.705. By applying a speech model, the number of alternative words that may correspond to a word in the speech input can be limited, as the speech model considers the context of the words and can thus identify which word makes most sense at a particular position. This may be achieved by using a grammatical model for a sentence, or by using statistics of word sequences. Even though a speech model is used in step 705, plural hypotheses may be obtained in step 706. Particularly since there will generally be a plurality of possible character sequences for an identified pseudo-word, several hypotheses are obtained. From the identified pseudo-words, pseudo-word properties are derived in step 707. Furthermore, alternatives, such as pronunciation alternatives, of the words and/or pseudo-words are formed in step 708. In step 709, properties of database entries are derived. Preferably, for the properties derived from pseudo-words, corresponding properties are derived from database entries. In step 710, a search is then performed, e.g. by comparing words within the database entries with words of the search query formed from the plural hypothesis, and/or by comparing database entry properties with pseudo-word properties. The search delivers a list of search results, which is then ordered in step 711. The hypotheses that are provided in step 706 may be weighted, e.g. according to some measure of confidence which indicates how confident the speech recognition process is that the hypothesis corresponds to the entered search request. As the several hypotheses are weighted differently, search results obtained by using a particular hypothesis may also be weighted correspondingly. This ensures that search results which are obtained using a hypothesis with a high measure of confidence as a search query are weighted such that the weighting indicates their relevance. A higher weight may, for example, be assigned to more relevant search results, i.e. search results based on high confidence search queries or search results comprising a large number of words of the search query. According to their relevance and thus to their weight, the search results are ordered in step 711. The search results are then provided to the user in step 712. In step 713, found words, i.e. words of the search query found in the database entries, are provided to the user. In a next step 714, the user excludes or devaluates search results or found words. The so-modified list of found words may then be used in step 715 to perform a new search, the search results of which are then again ordered in step 716 and provided to the user in step 717. If only search results were excluded or devaluated, the step 715 may be skipped and the list of search results may simply be reordered in step 716. Similarly, the new list of found words created by the user in step 714 may simply be used to reorder the search results in step 716 and provide these to the user in step 717. The user is thus provided with simple means to improve the search and obtain more accurate search results.

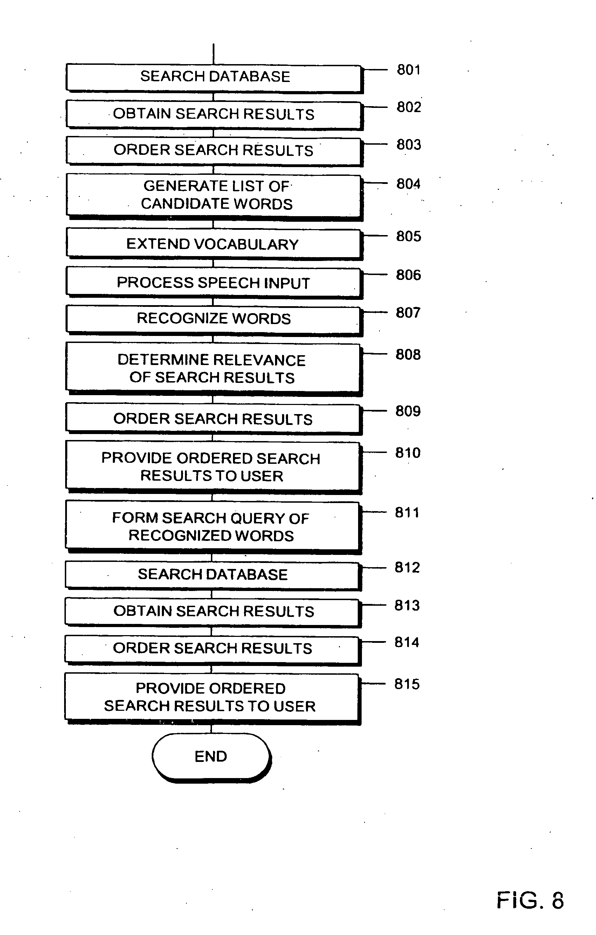

Fig. 8 show a flow diagram of another embodiment of a method for recognizing speech for searching a database. In particular, Fig. 8 show a flow diagram of how a first search result may be further processed. The first step 801 of Fig. 8 may be performed after step 709 of Fig. 7 or step 603 of Fig. 6. In step 801, the database is searched, using a search query comprising words and pseudo-words. Search results are obtained in step 802. The search results may comprise a list of database entries, e.g. links, as well as a list of the words found during the search, and candidate words. The list of search results is ordered in step 803. In step 804, a list of candidate words is generated. The candidate words may be delivered from the search engine used to search the database for pseudo-words, yet, they may also be extracted from the list of search results by comparing the search results to pseudo-words, or entry properties to pseudo-word properties. Using the list of candidate words, a vocabulary used to identify words in a speech input is extended with the list of candidate words in step 805. Alternatively, an extended vocabulary comprising only the found words and the candidate words may be used. Extended in that sense means that the vocabulary comprises words corresponding to pseudo-words. In a next step 806, the speech input is processed. Processing may for example occur in a processing unit, such as the first reprocessing unit 111 of Fig. 1. During processing, words comprised in the speech input are recognized in step 807 by using the extended vocabulary. Furthermore, a speech model may be used in order to better assign words of the vocabulary to the words comprised in the speech input. As a result, a recognizing of even the previously unrecognized pseudo-words is enabled. Using the recognized words, and possibly a measure of confidence for the recognition, the relevance of the search results, which were obtained in step 802, is determined in step 808. The relevance may for example be determined by the number of words of the speech input comprised in a search result, or by the measure of confidence associated with the found words comprised in a search result. There are several ways to determine the relevance of a search result known to a person skilled in the art, and it is not important which way of determination is used. In step 809, the search results are ordered according to their relevance. In step 810, the ordered search results are provided to the user. Preferably, the ordering occurs in such a way that the most relevant search results are provided to the user first. They may, for example, be provided in form of a graphical display of a list of search results, with the most relevant search results being displayed on top of the list. Yet, they may also be provided to the user in form of a speech output, e.g. using a text-to-voice system. By using the extended vocabulary, a better recognition of the words in the speech input, and a more precise determination of the actual words comprised in the input becomes possible, and as a result, the determination of the relevance of search results is improved. The ordering of the search results is thus enhanced, and the more relevant results can be provided to the user first.

In a next step 811, a new search query is formed of the recognized words, i.e. the words recognized in step 807 using the extended vocabulary. In step 812, the database is searched using the new search query. As the extended vocabulary enables a. better recognition of words comprised in the speech input, the new search query will better correspond to the search request of the user, and accordingly, better search results may be obtained by searching the database again in step 812. In step 813, search results are obtained. These are again ordered according to their relevance in step 814. The ordered search results are provided to the user in step 815. As a new search query was used, the search results now comprise new search results, which were not obtained in step 802. The reason is that for the search in step 801, the search query comprised pseudo-words, which are often no proper words. Yet, by searching the database in step 812 with the new search query, the new search query preferably only comprising proper words such as found words or candidate words, better search results are obtained. In cases where no appropriate candidate word was obtained for a pseudo-word, the new search query may still comprise a pseudo-word. The steps 805 to 810 and 811 to 815 may be performed as background processes, while the first list of search results is provided to the user. With a time delay, better search results may then be provided in step 810, and in step 815. Whereas step 810 provides better search results in form of a better order, step 815 provides better search results as it comprises new search results.

It should be clear that the different aspects and features of the embodiments of the presently described invention may be combined, or that features of an embodiment which are not essential to the invention are only optional and may be left out. For example, in the embodiment of Fig. 8, steps 808 to 810 may be left out, or the embodiment of Fig. 8 may be combined with the manual exclusion and devaluation of the embodiment of Fig. 7. In summary, the described invention enables the search of a large database with speech recognition, even if only a very limited vocabulary is used for speech recognition.

## Claims

1. Method of recognizing speech for searching a database (106), wherein a user enters a search request as a speech input (102), comprising the following steps:
processing the speech input (102) in a speech recognition step (602, 703) by
determining a phonetic sequence having a plurality of segments for the speech input;
recognizing words associated with a portion of the segments using a vocabulary;
associating the remaining segments with pseudo-words wherein pseudo words are graphemes;
obtaining at least one hypothesis comprising the recognized words and the pseudo-words not recognized as words within the vocabulary used to recognize words of the speech input; and
searching entries of the database (106) using the at least one hypothesis (104) as a search query, wherein a list of search results (107) is obtained.

2. Method according to claim 1, **characterized by** further comprising the step of processing the speech input to form a plurality of hypotheses.

3. Method according to any of the preceding claims, **characterized in that** the speech recognition step comprises the use of a speech model using statistical probabilities of word sequences to recognize words.

4. Method according to any of the preceding claims, **characterized in that** plural pseudo-word hypotheses are generated for a pseudo-word, resulting in a plurality of hypotheses and search queries.

5. Method according to any of the preceding claims, **characterized in that** a vocabulary used to recognize the words of the speech input (102) comprises one or a combination of the following: words obtained from a list of the most commonly used search queries for a database, words obtained from a list of the most commonly spoken search requests, pronunciation alternatives of words, words obtained from user operated applications.

6. Method according to any of the preceding claims, **characterized in that** words are excluded from the at least one hypothesis according to an exclusion vocabulary.

7. Method according to any of the preceding claims, **characterized by** further comprising the step of deriving pseudo-word properties for a pseudo-word.

8. Method according to claim 7, **characterized in that** searching the database (106) comprises deriving entry properties from database entries and/or entry alternatives and comparing the pseudo-word properties with the entry properties to find entries most closely corresponding to the pseudo-words.

9. Method according to claim 7 or 8, **characterized in that** searching the database (106) comprises generating pre-processed database entries by forming entry alternatives and comparing the pre-processed database entries with the at least one hypothesis.

10. Method according to claim 8 or 9, **characterized in that** entry alternatives are obtained by forming orthographic and/or pronunciation alternatives of database entries.

11. Method according to any of the preceding claims, **characterized by** further comprising the steps of estimating the language of words comprised in the at least one hypothesis (104) and/or of database entries and performing the search in the database (106) taking into account the estimated language.

12. Method according to any of the preceding claims, **characterized by** further comprising the step of identifying semantic information in the speech input (102) and performing the search taking into account the semantic information.

13. Method according to any of the preceding claims, **characterized in that** the search results are weighted in the list of search results, and that the search results are provided to the user according to their weighting.

14. Method according to any of the preceding claims, **characterized by** further comprising the step of identifying candidate-words in the list of search results as most probable words corresponding to the pseudo-words.

15. Method according to claim 14, **characterized by** further comprising the step of providing an extended vocabulary comprising the candidate words.

16. Method according to claim 15, **characterized by** further comprising the steps of recognizing words (807) in the speech input (102) using the extended vocabulary and reordering (809) the list of search results (107) taking into account the recognized words, wherein a new list of search results is obtained.

17. Method according to claim 15 or 16, **characterized by** further comprising the steps of recognizing words (807) in the speech input (102) using the extended vocabulary to obtain at least one hypothesis (104), and performing a search of the database (106) using the at least one hypothesis (104) as a search query, wherein a new list of search results is obtained

18. Method according to claim 16 or 17, **characterized in that** the new list of search results is provided to the user after a predetermined amount of time.

19. Method according to any of the preceding claims, **characterized by** further comprising the step of excluding and/or devaluating search results and/or words comprised in the search query by means of a user input.

20. Method according to any of the preceding claims, **characterized in that** the database (106) is searched using a search method configured to deliver search results comprising words which are selected by the search method to be most probable words corresponding to the pseudo-words.

21. System for recognizing speech for searching a database, comprising:
a speech recognition unit (103) adapted to detect a search request of a user in form of a speech input (102), the speech recognition unit being formed so as to recognize a phonetic sequence having a plurality of segments of the speech input (102), the speech recognition unit being adapted to associate a portion of the segments with words using a vocabulary and the remaining segments with pseudo-words wherein the pseudo words are graphemes and wherein at least one hypothesis (104) is obtained comprising recognized words and pseudo-words not recognized as words, wherein pseudo-words are words which are not comprised in the vocabulary used to recognize words of the speech input(102),
a database (106) and
a search unit (105) adapted to search entries of the database (106) using the at least one hypothesis (104) as a search query, wherein a list of search results (107) is obtained.

22. System according to claim 21, **characterized in that** the search unit (105) is formed so as to provide a list of candidate words (108) which are words comprised in the search results and associated with pseudo-words of the hypothesis.

23. System according to claim 22, **characterized by** further comprising a first reprocessing unit (111) formed so as to recognize words in the speech input (102) using an extended vocabulary comprising the candidate words and to reorder the list of search results (107) depending on the result of the recognition.

24. System according to claim 22 or 23, **characterized by** further comprising a second reprocessing unit (112) formed so as to recognize words in the speech input (102) using an extended vocabulary comprising the candidate words to obtain at least one hypothesis (104), and to provide said hypothesis (104) to the search unit (105) for being used as a search query.

25. System according to any of claims 21 to 24, **characterized in that** the speech recognition unit (103) is furthermore formed so as to provide pseudo-word properties associated with pseudo-words, wherein the search unit (105) is furthermore formed so as to compare the pseudo-word properties to properties derived from data base entries and/or entry alternatives when searching the database (106).

26. System according to any of claims 21 to 25, **characterized by** being formed so as to perform any of the methods of claims 2 to 20.

27. Computer program product that can be loaded into the internal memory of a computer, said product comprising software code portions adapted to perform any of the methods of claims 1-20 when the product is executed.

28. Electronically readable data carrier with stored electronically readable control information configured such that when using the data carrier in a computer system, the control information performs the method of one of claims 1 to 20.

## Patentansprüche

1. Verfahren zur Erkennung von Sprache zum Durchsuchen einer Datenbank (106), wobei ein Benutzer eine Suchabfrage als eine Spracheingabe (102) eingibt, wobei das Verfahren die folgenden Schritte umfasst:
Verarbeiten der Spracheingabe (102) in einem Spracherkennungsschritt (602, 703) durch
Bestimmen einer phonetischen Sequenz, die mehrere Segmente für die Spracheingabe aufweist;
Erkennen von Wörtern, die zu einem Teil der Segmente gehören, unter Verwendung eines Vokabulars;
Verknüpfen der verbleibenden Segmente mit Pseudowörtern, wobei Pseudowörter Grapheme sind;
Erhalten von mindestens einer Hypothese, die die erkannten Wörter und die Pseudowörter umfasst, die in dem Vokabular, das zum Erkennen der Wörter der Spracheingabe verwendet wurde, nicht als Wörter erkannt wurden; und
Suchen von Einträgen der Datenbank (106) unter Verwendung der mindestens einen Hypothese (104) als eine Suchanfrage, wobei eine Liste von Suchergebnissen (107) erhalten wird.

2. Verfahren nach Anspruch 1, **dadurch gekennzeichnet, dass** das Verfahren des Weiteren den Schritt des Verarbeitens der Spracheingabe zum Bilden mehrerer Hypothesen umfasst.

3. Verfahren nach einem der vorstehenden Ansprüche, **dadurch gekennzeichnet, dass** der Spracherkennungsschritt die Verwendung eines Sprachmodells umfasst, das statistische Wahrscheinlichkeiten von Wortsequenzen zum Erkennen von Wörtern verwendet.

4. Verfahren nach einem der vorstehenden Ansprüche, **dadurch gekennzeichnet, dass** mehrere Pseudoworthypothesen für ein Pseudowort erzeugt werden, was in mehreren Hypothesen und Suchanfragen resultiert.

5. Verfahren nach einem der vorstehenden Ansprüche, **dadurch gekennzeichnet, dass** ein Vokabular, das zum Erkennen der Wörter der Spracheingabe (102) verwendet wird, eines oder eine Kombination der folgenden umfasst: Wörter, die von einer Liste der am häufigsten verwendeten Suchabfragen für eine Datenbank erhalten wurden, Wörter, die von einer Liste der am häufigsten gesprochenen Suchabfragen erhalten wurden, Aussprachealternativen von Wörtern, Wörter, die von benutzerbedienbaren Applikationen erhalten wurden.

6. Verfahren nach einem der vorstehenden Ansprüche, **dadurch gekennzeichnet, dass** Wörter von der mindestens einen Hypothese gemäß einem Ausschlussvokabular ausgeschlossen werden.

7. Verfahren nach einem der vorstehenden Ansprüche, **dadurch gekennzeichnet, dass** das Verfahren des Weiteren den Schritt eines Ermittelns von Pseudoworteigenschaften für ein Pseudowort umfasst.

8. Verfahren nach Anspruch 7, **dadurch gekennzeichnet, dass** das Durchsuchen der Datenbank (106) das Ermitteln von Eintragseigenschaften von Datenbankeinträgen und/oder Eintragsalternativen und das Vergleichen der Pseudoworteigenschaften mit den Eintragseigenschaften umfasst, um Einträge aufzufinden, die den Pseudowörtern am nächsten entsprechen.

9. Verfahren nach Anspruch 7 oder 8, **dadurch gekennzeichnet, dass** das Durchsuchen der Datenbank (106) das Erzeugen von vorverarbeiteten Datenbankeinträgen durch Bilden von Eintragsalternativen und das Vergleichen der vorverarbeiteten Datenbankeinträge mit der mindestens einen Hypothese umfasst.

10. Verfahren nach Anspruch 8 oder 9, **dadurch gekennzeichnet, dass** die Eintragsalternativen durch Bilden von orthographischen und/oder Aussprachealternativen von Datenbankeinträgen erhalten werden.

11. Verfahren nach einem der vorstehenden Ansprüche, **dadurch gekennzeichnet, dass** das Verfahren des Weiteren die Schritte eines Abschätzens der Sprache von Wörtern, die in der mindestens einen Hypothese (104) umfasst sind, und/oder von Datenbankeinträgen, und das Durchführen der Suche in der Datenbank (106) unter Berücksichtigung der geschätzten Sprache umfasst.

12. Verfahren nach einem der vorstehenden Ansprüche, **dadurch gekennzeichnet, dass** das Verfahren des Weiteren den Schritt eines Identifizierens semantischer Informationen in der Spracheingabe (102) und das Durchführen der Suche unter Berücksichtung der semantischen Informationen umfasst.

13. Verfahren nach einem der vorstehenden Ansprüche, **dadurch gekennzeichnet, dass** die Suchergebnisse in der Liste von Suchergebnissen gewichtet werden, und dass die Suchergebnisse dem Benutzer gemäß ihrer Gewichtung bereitgestellt werden.

14. Verfahren nach einem der vorstehenden Ansprüche, **dadurch gekennzeichnet, dass** das Verfahren des Weiteren den Schritt eines Identifizierens von Kandidatenwörtern in der Liste der Suchergebnisse als die Wörter, die den Pseudowörtern am wahrscheinlichsten entsprechen, umfasst.

15. Verfahren nach Anspruch 14, **dadurch gekennzeichnet, dass** das Verfahren des Weiteren den Schritt eines Bereitstellens eines erweiterten Vokabulars, das die Kandidatenwörter umfasst, umfasst.

16. Verfahren nach Anspruch 15, **dadurch gekennzeichnet, dass** das Verfahren des Weiteren die Schritte eines Erkennens von Wörtern (807) in der Spracheingabe (102) unter Verwendung des erweiterten Vokabulars und eines Neuordnens (809) der Liste von Suchergebnissen (107) unter Berücksichtigung der erkannten Wörter umfasst, wodurch eine neue Liste von Suchergebnissen erhalten wird.

17. Verfahren nach Anspruch 15 oder 16, **dadurch gekennzeichnet, dass** das Verfahren des Weiteren die Schritte eines Erkennens von Wörtern (807) in der Spracheingabe (102) unter Verwendung des erweiterten Vokabulars zum Ermitteln von mindestens einer Hypothese (104), und ein Durchführen einer Suche der Datenbank (106) unter Verwendung der mindestens einen Hypothese (104) als eine Suchanfrage umfasst, wobei eine neue Liste von Suchergebnissen erhalten wird.

18. Verfahren nach Anspruch 16 oder 17, **dadurch gekennzeichnet, dass** die neue Liste von Suchergebnissen dem Benutzer nach einer vorbestimmten Zeitspanne bereitgestellt wird.

19. Verfahren nach einem der vorstehenden Ansprüche, **dadurch gekennzeichnet, dass** das Verfahren des Weiteren den Schritt eines Ausschließens und/oder Abwertens von Suchergebnissen und/oder Wörtern, die in der Suchanfrage umfasst sind, mittels einer Benutzereingabe umfasst.

20. Verfahren nach einem der vorstehenden Ansprüche, **dadurch gekennzeichnet, dass** die Datenbank (106) unter Verwendung eines Suchverfahrens durchsucht wird, das konfiguriert ist, um Suchergebnisse zu liefern, die Wörter umfassen, welche von dem Suchverfahren als die Wörter ausgewählt sind, die am wahrscheinlichsten den Pseudowörtern entsprechen.

21. System zum Erkennen von Sprache zum Durchsuchen einer Datenbank, umfassend:
eine Spracherkennungseinheit (103), die ausgestaltet ist, um eine Suchabfrage eines Benutzers in Form einer Spracheingabe (102) zu detektieren, wobei die Spracherkennungseinheit ausgestaltet ist, um eine phonetische Sequenz zu erkennen, die mehrere Segmente der Spracheingabe (102) aufweist, wobei die Spracherkennungseinheit ausgestaltet ist, um einen Teil der Segmente unter Verwendung eines Vokabulars mit Wörtern zu verknüpfen und die verbleibenden Segmente mit Pseudowörtern zu verknüpfen, wobei die Pseudowörter Grapheme sind und wobei mindestens eine Hypothese (104) erhalten wird, die erkannte Wörter und Pseudowörter, die nicht als Wörter erkannt wurden, umfasst, wobei Pseudowörter Wörter sind, die nicht in dem Vokabular umfasst sind, das zum Erkennen der Wörter der Spracheingabe (102) verwendet wurde,
eine Datenbank (106), und
eine Sucheinheit (105), die ausgestaltet ist, um Einträge der Datenbank (106) unter Verwendung der mindestens einen Hypothese (104) als eine Suchanfrage zu suchen, wobei eine Liste von Suchergebnissen (107) erhalten wird.

22. System nach Anspruch 21, **dadurch gekennzeichnet, dass** die Sucheinheit (105) ausgestaltet ist, um eine Liste von Kandidatenwörtern (108) bereitzustellen, welche Wörter sind, die in den Suchergebnissen umfasst sind und zu Pseudowörtern der Hypothese gehören.

23. System nach Anspruch 22, **dadurch gekennzeichnet, dass** es des Weiteren eine erste Weiterverarbeitungseinheit (111) umfasst, die ausgestaltet ist, um Wörter in der Spracheingabe (102) unter Verwendung eines erweiterten Vokabulars, das die Kandidatenwörter umfasst, zu erkennen und die Liste der Suchergebnisse (107) in Abhängigkeit des Ergebnisses der Erkennung neu zu ordnen.

24. System nach Anspruch 22 oder 23, **dadurch gekennzeichnet, dass** es des Weiteren eine zweite Weiterverarbeitungseinheit (112) umfasst, die ausgestaltet ist, um Wörter in der Spracheingabe (102) unter Verwendung eines erweiterten Vokabulars, das die Kandidatenwörter umfasst, zu erkennen, um mindestens eine Hypothese (104) zu erhalten, und um die Hypothese (104) der Sucheinheit (105) bereitzustellen, um als Suchanfrage verwendet zu werden.

25. System nach einem der Ansprüche 21 bis 24, **dadurch gekennzeichnet, dass** die Spracherkennungseinheit (103) des Weiteren ausgestaltet ist, um Pseudoworteigenschaften, die mit Pseudowörtern verknüpft sind, bereitzustellen, wobei die Sucheinheit (105) des Weiteren ausgestaltet ist, um die Pseudoworteigenschaften mit Eigenschaften zu vergleichen, die von Datenbankeinträgen und/oder Eintragsalternativen bestimmt wurden, wenn die Datenbank (106) durchsucht wird.

26. System nach einem der Ansprüche 21 bis 25, **dadurch gekennzeichnet, dass** das System ausgestaltet ist, um eines der Verfahren nach den Ansprüchen 2 bis 20 durchzuführen.

27. Computerprogrammprodukt, das in den internen Speicher eines Computers geladen werden kann, wobei das Produkt Softwarecodebereiche umfasst, die ausgestaltet sind, um eines der Verfahren der Ansprüche 1 bis 20 durchzuführen, wenn das Produkt ausgeführt wird.

28. Elektronisch lesbarer Datenträger mit gespeicherten elektronisch lesbaren Steuerinformationen, die derart konfiguriert sind, dass wenn der Datenträger in einem Computersystem verwendet wird, die Steuerinformationen das Verfahren nach einem der Ansprüche 1 bis 20 durchführen.

## Revendications

1. Procédé de reconnaissance de la parole pour une recherche dans une base de données (106), dans lequel un utilisateur entre une requête de recherche sous forme d'une entrée vocale (102), comprenant les étapes suivantes:
traitement de l'entrée vocale (102) dans une étape de reconnaissance de la parole (602, 703) par
détermination d'une séquence phonétique ayant une pluralité de segments pour l'entrée vocale;
reconnaissance de mots associés à une portion des segments à l'aide d'un vocabulaire;
association des segments restants à des pseudo-mots, les pseudo-mots étant des graphèmes;
obtention d'au moins une hypothèse comprenant les mots reconnus et les pseudo-mots non reconnus en tant que mots dans le vocabulaire utilisé pour reconnaître des mots de l'entrée vocale; et
recherche dans des entrées de la base de données (106) à l'aide de la au moins une hypothèse (104) en tant que requête de recherche, une liste de résultats de recherche (107) étant obtenue.

2. Procédé selon la revendication 1, **caractérisé en ce qu'**il comprend en outre l'étape de traitement de l'entrée vocale pour former une pluralité d'hypothèses.

3. Procédé selon l'une quelconque des revendications précédentes, **caractérisé en ce que** l'étape de reconnaissance de la parole comprend l'utilisation d'un modèle de parole utilisant des probabilités statistiques de séquences de mots pour reconnaître des mots.

4. Procédé selon l'une quelconque des revendications précédentes, **caractérisé en ce qu'**une pluralité d'hypothèses de pseudo-mots sont générées pour un pseudo-mot, résultant en une pluralité d'hypothèses et de requêtes de recherche.

5. Procédé selon l'une quelconque des revendications précédentes, **caractérisé en ce qu'**un vocabulaire utilisé pour reconnaître les mots de l'entrée vocale (102) comprend les mots suivants seuls ou en combinaison: des mots obtenus à partir d'une liste des requêtes de recherche les plus usuellement utilisées pour une base de données, des mots obtenus à partir d'une liste des requêtes de recherche les plus usuellement prononcées, des alternatives de prononciation des mots, des mots obtenus à partir d'applications exécutées par des utilisateurs.

6. Procédé selon l'une quelconque des revendications précédentes, **caractérisé en ce que** des mots sont exclus de ladite au moins une hypothèse conformément à un vocabulaire d'exclusion.

7. Procédé selon l'une quelconque des revendications précédentes, **caractérisé en ce qu'**il comprend en outre l'étape de dérivation de propriétés de pseudo-mot pour un pseudo-mot.

8. Procédé selon la revendication 7, **caractérisé en ce que** la recherche dans la base de données (106) comprend la dérivation de propriétés d'entrée à partir d'entrées de la base de données et/ou d'alternatives d'entrée et la comparaison des propriétés de pseudo-mot avec les propriétés d'entrée pour trouver des entrées qui correspondent au plus près aux pseudo-mots.

9. Procédé selon la revendication 7 ou 8, **caractérisé en ce que** la recherche dans la base de données (106) comprend la génération d'entrées pré-traitées de la base de données en formant des alternatives d'entrée et en comparant les entrées pré-traitées de la base de données avec la au moins une hypothèse.

10. Procédé selon la revendication 8 ou 9, **caractérisé en ce que** des alternatives d'entrée sont obtenues en formant des alternatives orthographiques et/ou de prononciation d'entrées de la base de données.

11. Procédé selon l'une quelconque des revendications précédentes, **caractérisé en ce qu'**il comprend en outre les étapes d'estimation du langage de mots compris dans la au moins une hypothèse (104) et/ou d'entrées de la base de données et d'exécution de la recherche dans la base de données (106) en tenant compte du langage estimé.

12. Procédé selon l'une quelconque des revendications précédentes, **caractérisé en ce qu'**il comprend en outre l'étape d'identification d'une information sémantique dans l'entrée vocale (102) et d'exécution de la recherche en tenant compte de l'information sémantique.

13. Procédé selon l'une quelconque des revendications précédentes, **caractérisé en ce que** les résultats de recherche sont pondérés dans la liste de résultats de recherche et que les résultats de recherche sont fournis à l'utilisateur en fonction de leur pondération.

14. Procédé selon l'une quelconque des revendications précédentes, **caractérisé en ce qu'**il comprend en outre l'étape d'identification de mots candidats dans la liste de résultats de recherche comme étant les mots les plus probables correspondant aux pseudo-mots.

15. Procédé selon la revendication 14, **caractérisé en ce qu'**il comprend en outre l'étape de fourniture d'un vocabulaire élargi comprenant les mots candidats.

16. Procédé selon la revendication 15, **caractérisé en ce qu'**il comprend en outre les étapes de reconnaissance des mots (807) dans l'entrée vocale (102) à l'aide du vocabulaire élargi et de ré-ordonnancement (809) de la liste de résultats de recherche (107) en tenant compte des mots reconnus, une nouvelle liste de résultats de recherche étant obtenue.

17. Procédé selon la revendication 15 ou 16, **caractérisé en ce qu'**il comprend en outre les étapes de reconnaissance des mots (807) dans l'entrée vocale (102) à l'aide du vocabulaire élargi pour obtenir au moins une hypothèse (104), et d'exécution d'une recherche dans la base de données (106) à l'aide de la au moins une hypothèse (104) en tant que requête de recherche, une nouvelle liste de résultats de recherche étant obtenue.

18. Procédé selon la revendication 16 ou 17, **caractérisé en ce que** la nouvelle liste de résultats de recherche est fournie à l'utilisateur après une période de temps prédéterminée.

19. Procédé selon l'une quelconque des revendications précédentes, **caractérisé en ce qu'**il comprend en outre l'étape d'exclusion et/ou de dévaluation des résultats de recherche et/ou des mots compris dans la requête de recherche au moyen d'une entrée par l'utilisateur.

20. Procédé selon l'une quelconque des revendications précédentes, **caractérisé en ce que** la recherche dans la base de données (106) est effectuée à l'aide d'un procédé de recherche configuré pour délivrer des résultats de recherche comprenant des mots qui sont sélectionnés par le procédé de recherche comme étant des mots les plus probables correspondant aux pseudo-mots.

21. Système de reconnaissance de la parole pour une recherche dans une base de données, comprenant:
une unité de reconnaissance de la parole (103) adaptée à détecter une requête de recherche provenant d'un utilisateur sous forme d'une entrée vocale (102), l'unité de reconnaissance de la parole étant conformée de manière à reconnaître une séquence phonétique ayant une pluralité de segments de l'entrée vocale (102), l'unité de reconnaissance de la parole étant adaptée à associer une portion des segments à des mots à l'aide d'un vocabulaire, et les segments restants à des pseudo-mots, dans lequel les pseudo-mots sont des graphèmes, et dans lequel au moins une hypothèse (104) comprenant des mots reconnus et des pseudo-mots non reconnus comme mots est obtenue, les pseudo-mots étant des mots qui ne sont pas compris dans le vocabulaire utilisé pour reconnaître des mots de l'entrée vocale(102), une base de données (106) et
une unité de recherche (105) adaptée à rechercher dans des entrées de la base de données (106) à l'aide de la au moins une hypothèse (104) en tant que requête de recherche, une liste de résultats de recherche (107) étant obtenue.

22. Système selon la revendication 21, **caractérisé en ce que** l'unité de recherche (105) est conformée pour fournir une liste de mots candidats (108) qui sont des mots compris dans les résultats de recherche et associés à des pseudo-mots de l'hypothèse.

23. Système selon la revendication 22, **caractérisé en ce qu'**il comprend en outre une première unité de re-traitement (111) conformée pour reconnaître des mots dans l'entrée vocale (102) à l'aide d'un vocabulaire élargi comprenant les mots candidats, et pour ré-ordonnancer la liste des résultats de recherche (107) en fonction du résultat de la reconnaissance.

24. Système selon la revendication 22 ou 23, **caractérisé en ce qu'**il comprend en plus une deuxième unité de re-traitement (112) conformée pour reconnaître des mots dans l'entrée vocale (102) à l'aide d'un vocabulaire élargi comprenant les mots candidats pour obtenir au moins une hypothèse (104), et pour fournir ladite hypothèse (104) à l'unité de recherche (105) en vue de son utilisation en tant que requête de recherche.

25. Système selon l'une quelconque des revendications 21 à 24, **caractérisé en ce que** l'unité de reconnaissance de la parole (103) est en outre conformée pour fournir des propriétés de pseudo-mot associées à des pseudo-mots, l'unité de recherche (105) étant en outre conformée pour comparer les propriétés de pseudo-mot à des propriétés dérivées d'entrées du banc de données et/ou d'alternatives d'entrée lors de la recherche dans la base de données (106).

26. Système selon l'une quelconque des revendications 21 à 25, **caractérisé en ce qu'**il est conformé pour exécuter l'un quelconque des procédés des revendications 2 à 20.

27. Produit programme ordinateur pouvant être chargé dans la mémoire interne d'un ordinateur, ledit produit comprenant des portions de code logiciel adaptées à exécuter l'un quelconque des procédés selon les revendications 1-20 lorsque le produit est exécuté.

28. Support de données lisible électroniquement comprenant des informations de contrôle lisibles électroniquement et configurées de telle manière que, lorsque le support de données est utilisé dans un système d'ordinateur, les informations de contrôle exécutent le procédé selon l'une quelconque des revendications 1 à 20.
